# FASCICULE DE BREVET EUROPEEN

(11) **EP 0 695 014 B1**
(45) Date de publication et mention de la délivrance du brevet: **02.09.1998**
(21) Numéro de dépôt: 95401740.6
(22) Date de dépôt: 24.07.1995
(51) Int. Cl.: H02G 15/18

(54) **Accessoire de raccordement de câbles d'énergie basse tension**
Garnitur für die Verbindung von Niederspannungsenergiekabeln
Connection accessory for low voltage power cables

(30) Priorité: 29.07.1994 FR 9409422
(43) Date de publication de la demande: 31.01.1996
(73) Titulaire: CABLES PIRELLI, F-94410 Saint Maurice (FR)
(72) Inventeur: Garban, Béatrice J.M.C., F-75014 Paris (FR); Dupays, Daniel H.M., F-88250 La Bresse (FR)
(74) Mandataire: Lepeudry-Gautherat, Thérèse

(56) Documents cités:
- EP-A- 0 219 071
- EP-A- 0 542 010
- WO-A-90/05401
- WO-A-92/17928
- FR-A- 2 278 183
- FR-A- 2 332 637

## Description

L'invention se situe dans le domaine technique des câbles d'énergie basse tension, et vise plus précisément leur raccordement.

Le terme générique de raccordement désigne notamment la jonction de deux câbles, ou la connexion d'un câble dérivé sur un câble principal, c'est-à-dire une simple dérivation, ou encore la connexion de deux câbles dérivés sur un câble principal, c'est-à-dire une double dérivation.

Le raccordement lui-même consiste tout d'abord à dénuder les conducteurs élémentaires des différents câbles mis en jeu, puis à les connecter selon la nature de l'opération. Une fois les connexions réalisées, un carter rigide est alors mis en place comme décrit dans le EP-A 0 542 010. En outre le carter est souvent garni d'une matière d'isolation coulée ou injectée in situ, qui est généralement une résine du type époxy ou polyuréthane. Outre le fait qu'un tel garnissage rallonge l'opération de raccordement, différents inconvénients sont inhérents à la nature même de la matière de remplissage.

En effet, cette dernière ne peut être stockée indéfiniment sous peine de perdre ses propriétés.

De plus, elle est susceptible de présenter des risques certains non seulement pour le monteur, mais également pour l'environnement.

On connaît également par le US-A 5 132 495 une enveloppe plus ou moins rigide en forme de manchon que l'on place sur la connectique.

Une autre solution consiste à réaliser une série de rubanages autour de la zone de raccordement.

Toutefois, un tel dispositif nécessite également l'injection d'une matière de remplissage.

Une autre solution consiste à rétreindre un fourreau thermorétractable autour de la zone de raccordement. Cependant, l'emploi obligatoire d'une flamme rend l'opération délicate voire dangereuse pour le monteur.

Afin de remédier à ces inconvénients, l'invention a pour objet un accessoire assurant un raccordement sans flamme, simple et durable, tout en permettant de s'affranchir de l'utilisation d'une matière de remplissage.

Pour ce faire, l'invention a pour objet un accessoire de raccordement à froid de câbles basse tension, adapté à être disposé autour d'une zone de connexion comprenant deux zones latérales où les câbles sont gainés, et une zone intermédiaire de connectique, et comportant une enveloppe recouvrant la zone intermédiaire et fixée de manière étanche à ses deux extrémités latérales sur chacune d'une paire de brides rigides disposées au niveau de chaque zone latérale et pourvues chacune d'au moins un logement permettant la traversée d'un nombre correspondant de câbles gainés, ledit accessoire étant caractérisé en ce que l'enveloppe est une enveloppe élastique pourvue de plis longitudinaux et constituée d'une feuille repliée épousant étroitement la forme des câbles et des connecteurs, fermée à ses deux extrémités longitudinales par l'intermédiaire d'une liaison tenon-mortaise.

L'accessoire conforme à l'invention permet de réaliser les objectifs évoqués ci-dessus. En effet, il assure un raccordement à froid parfaitement étanche et durable.

En outre, grâce à l'utilisation d'une enveloppe étanche, l'accessoire ne nécessite pas l'emploi d'une matière de remplissage.

Sa nature élastique permet d'une part à l'enveloppe d'épouser au mieux le contour des câbles et de leur connectique, ce qui limite le volume total de l'accessoire. En outre, l'élasticité de l'enveloppe confère à l'accessoire une grande facilité de positionnement, de sorte qu'il est placé à partir de la position des câbles sur le terrain, et non pas l'inverse.

Enfin, grâce à l'invention, on dispose d'une gamme complète d'accessoires à partir d'un nombre limité de pièces, dans la mesure où des brides et des enveloppes de tailles différentes sont interchangeables.

D'autres avantages et caractéristiques de l'invention apparaissent à la lecture de la description de différents modes de réalisation, faite ci-après en référence aux dessins annexés dans lesquels
- la figure 1 est une vue schématique en perspective partiellement écorchée, d'un accessoire de raccordement conforme à l'invention
- la figure 2 est une vue agrandie en perspective montrant une variante de fermeture de l'enveloppe
- la figure 3 est une vue schématique illustrant l'interface entre la bride et l'enveloppe
- la figure 4 est une vue schématique en coupe montrant le système de positionnement de l'enveloppe
- la figure 5 est une coupe suivant le ligne V-V de la figure 1, de l'enveloppe de l'accessoire disposée autour des câbles et de leur connectique.

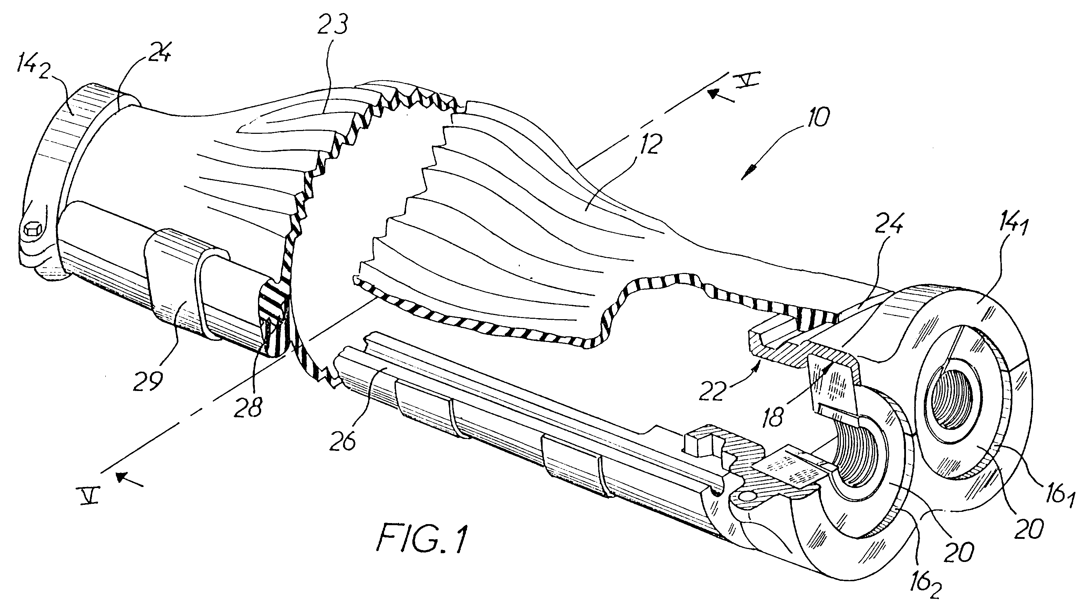

On voit à la figure 1, un accessoire de raccordement de câbles basse tension, désigné dans son ensemble par la référence 10.

Cet accessoire permet la connexion d'un câble dérivé sur un câble principal. Toutefois, il est possible d'envisager, sans sortir du cadre de l'invention, un accessoire de jonction ou de double dérivation.

L'accessoire se compose d'une enveloppe intermédiaire 12 et de deux brides latérales 14. Ces brides sont formées par exemple de deux demi-pièces complémentaires et sont réalisées en matériau métallique ou plastique. La première 14₁ de ces brides est destinée à emmancher une des extrémités du câble principal ainsi que le câble dérivé. A cette fin, elle est pourvue de deux logements 16₁, 16₂ circulaires de traversée des câbles, ménagés l'un à côté de l'autre. Ces logements présentent un profil 18 en forme de U dans lequel sont logés des joints 20 en matière élastomère permettant d'assurer l'étanchéité avec la gaine extérieure des câbles pénétrant dans chaque logement.

La bride 14₁ se prolonge en direction de la zone intermédiaire, par un méplat 22 coopérant avec l'extrémité de l'enveloppe en vue d'assurer la parfaite étanchéité de leur liaison mutuelle, comme décrit plus loin.

L'enveloppe 12 est par exemple constituée d'une feuille en élastomère ayant une épaisseur d'environ 6mm.

Dans l'exemple illustré, l'enveloppe est pourvue de plis longitudinaux 23 qui, à la manière d'un soufflet, permettent d'épouser au mieux le volume extérieur de la connectique et des câbles, compris entre les deux brides.

L'enveloppe peut également être munie de plis transversaux lui assurant une possibilité de cintrage, par exemple lorsque les deux brides latérales ne sont pas parallèles.

La feuille constitutive de l'enveloppe 12 est repliée sur elle-même et se trouve fixée à ses deux extrémités latérales 24, sur les méplats 22 respectifs des brides 14. La fermeture de l'enveloppe au niveau de ses deux extrémités longitudinales 26 est assurée par l'intermédiaire d'une liaison tenon-mortaise 28 renforcée au moyen d'un clip de serrage 29.

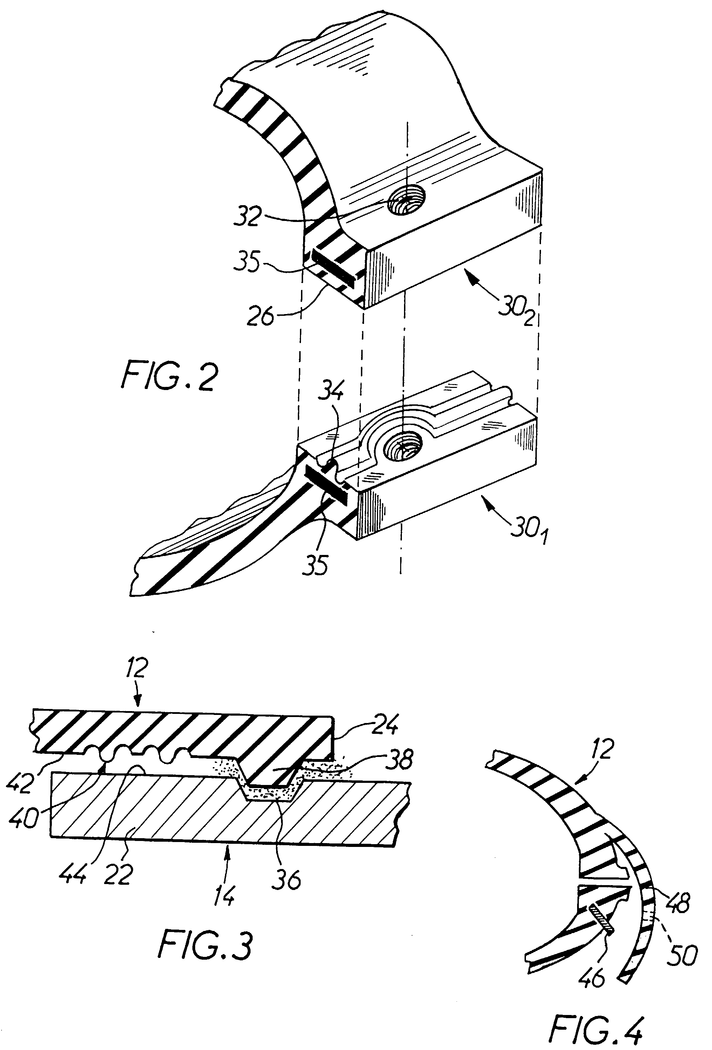

Une variante de fermeture de l'enveloppe est décrite à la figure 2. Deux méplats 30₁ et 30₂ s'étendant vers l'extérieur sont réalisés au niveau des extrémités longitudinales 26 de l'enveloppe 12. Ces méplats sont pourvus de trous 32 permettant le passage de moyens de fixation tels que par exemple des vis non représentées. L'étanchéité de la fermeture est améliorée en ménageant sur l'un des méplats 30₁ un joint à double gorge 34. Lors de la fermeture de l'enveloppe, ce dernier s'écrase sur la paroi plane du méplat 30₂ correspondant et assure une étanchéité accrue.

Deux inserts métalliques 35 sont en outre intercalés au sein de chaque méplat, en vue d'assurer leur rigidité et d'améliorer l'écrasement du joint à double gorge.

La figure 3 montre de manière plus précise la fixation de l'extrémité latérale 24 de l'enveloppe 12 sur le méplat 22 de la bride 14. A cet effet, une rainure 36 est ménagée dans le méplat 22, afin de recevoir une saillie 38 de l'enveloppe, de manière à réaliser une liaison tenon-mortaise.

L'étanchéité est assurée par l'intermédiaire d'au moins un joint à gorge 40 (deux dans l'exemple décrit). Ces joints sont ménagés au niveau de la surface interne 42 de l'enveloppe, en regard de la surface externe 44 plane de la bride 14. L'étanchéité est améliorée en imprégnant la zone de contact entre la rainure et la saillie au moyen d'un produit d'étanchéité comme du mastic.

Afin de rendre plus aisé son positionnement lors de sa fixation sur chaque bride, l'enveloppe est pourvue de doigts 46 qui sont constitués par un insert métallique faisant saillie sur l'une des extrémités longitudinales de l'enveloppe (voir figure 4). Chaque doigt coopère avec une languette souple 48 correspondante réalisée sur l'autre extrémité longitudinale de l'enveloppe, et munie d'un trou 50 permettant de la fixer sur le doigt.

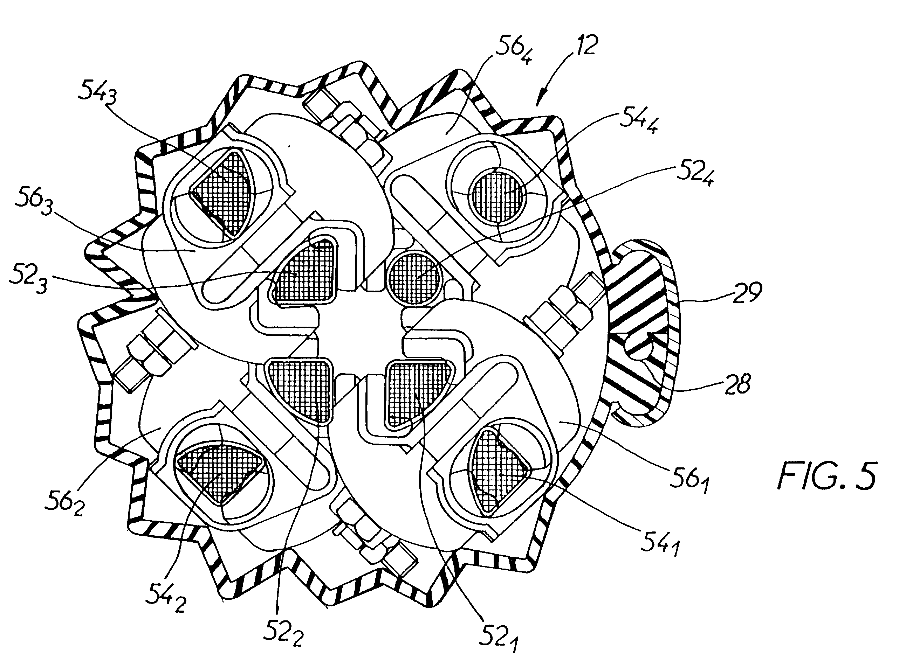

La figure 5 illustre le positionnement de l'enveloppe une fois l'accessoire monté.

De manière habituelle dans le cas d'une simple dérivation, les trois phases 52₁, 52₂, 52₃ ainsi que le neutre 52₄ du câble principal sont reliés aux phases respectives 54₁, 54₂, 54₃ et au neutre 54₄ du câble dérivé, par l'intermédiaire de connecteurs 56₁, 56₂, 56₃ et 56₄. Etant donné sa nature élastique, l'enveloppe 12 épouse au mieux les contours extérieurs de l'ensemble de la connectique, de manière à réduire au maximum le volume d'air résiduel et, de fait, l'encombrement global de l'accessoire.

L'invention n'est pas limitée aux exemples décrits, et différentes modifications peuvent y être apportées sans sortir de son cadre.

## Revendications

1. Accessoire de raccordement à froid de câbles d'énergie basse tension, adapté à être disposé autour d'une zone de connexion comprenant deux zones latérales où les câbles sont gainés et une zone intermédiaire de connectique, et comportant une enveloppe (12) recouvrant la zone intermédiaire et fixée de manière étanche à ses deux extrémités latérales (24) sur chacune d'une paire de brides rigides (14) disposées au niveau de chaque zone latérale et pourvues chacune d'au moins un logement (16) permettant la traversée d'un nombre correspondant de câbles gainés, caractérisé en ce que l'enveloppe (12) est une enveloppe élastique pourvue de plis longitudinaux (23), et constituée d'une feuille repliée épousant étroitement la forme des câbles et des connecteurs, fermée à ses deux extrémités longitudinales (26) par l'intermédiaire d'une liaison tenon-mortaise (28).

2. Accessoire selon la revendication 1, caractérisé en ce que les extrémités longitudinales (26) de l'enveloppe (12) présentent des méplats (30) pourvus de trous (32) pour le passage des moyens de fixation, un joint à double gorge (34) étant ménagé sur l'un (30) des méplats.

3. Accessoire selon les revendications 1 et 2 précédentes, caractérisé en ce que la bride (14) est pouvue d'une rainure (36) recevant une saillie (38) correspondante de l'enveloppe (12).

4. Accessoire selon la revendication 3, caractérisé en ce qu'au moins un joint à double gorge (40) est ménagé sur la surface interne (42) de l'enveloppe, en regard de la surface externe (44) de la bride (14).

5. Accessoire selon la revendication 1, caractérisé en ce que l'enveloppe (12) est pourvue d'au moins un doigt de positionnement (46) coopérant avec une languette souple (48) munie d'un trou (50).

## Patentansprüche

1. Ausstattung zum Kaltverbinden von Niederspannungsstromkabeln, welche so ausgelegt ist, daß sie um einen Verbindungsbereich herum angeordnet wird, der zwei Seitenbereiche, in denen die Kabel ummantelt sind, und einen Zwischenbereich für den Anschluß aufweist, und welche einen Mantel (12) aufweist, der den Zwischenbereich umhüllt und der auf dichte Weise mit seinen beiden seitlichen Enden (24) auf jedem Flansch eines Paares von starren Flanschen (14) befestigt ist, die auf der Höhe jedes Seitenbereiches angeordnet sind und die jeweils mit mindestens einer Ausnehmung (16) versehen sind, die den Durchgang einer entsprechenden Anzahl von ummantelten Kabeln erlaubt, dadurch gekennzeichnet, daß der Mantel (12) ein elastischer Mantel ist, der mit längsverlaufenden Falten (23) versehen ist und aus einer umgeschlagenen Folie besteht, die sich eng an die Form der Kabel und der Verbinder anpaßt und die an ihren beiden Längsenden (26) durch eine Nut-Steckfuß-Verbindung (28) geschlossen ist.

2. Ausstattung nach Anspruch 1, dadurch gekennzeichnet, daß die Längsenden (26) des Mantels (12) Abflachungen (30) aufweisen, die mit Löchern (32) für den Durchgang von Befestigungseinrichtungen versehen sind, wobei eine Doppelkehlverbindung (34) in einer (30) der Abflachungen angeordnet ist.

3. Ausstattung nach den vorhergehenden Ansprüchen 1 und 2, dadurch gekennzeichnet, daß der Flansch (14) mit einer Nut (36) versehen ist, die einen entsprechenden Vorsprung (38) des Mantels (12) aufnimmt.

4. Ausstattung nach Anspruch 3, dadurch gekennzeichnet, daß mindestens eine Doppelkehlverbindung (40) an der Innenfläche (42) des Mantels gegenüber der Außenfläche (44) des Flansches (14) angeordnet ist.

5. Ausstattung nach Anspruch 1, dadurch gekennzeichnet, daß der Mantel (12) mit mindestens einem Positionierungsfinger (46) versehen ist, der mit einer nachgiebigen Lasche (48) zusammenwirkt, die mit einem Loch (50) versehen ist.

## Claims

1. Accessory for the cold connection of low voltage power cables, fit for being placed about a connection area comprising two lateral areas, in which the cables are sheathed, and an intermediate physical interconnection area, and including an envelope (12) covering said intermediate area and sealingly fixed at its two lateral ends (24) to each of a pair of rigid flanges (14) placed in the region of each said lateral area and each provided with one or more housings (16) for the passage of a corresponding number of sheathed cables, characterised in that said envelope (12) is an elastic envelope provided with longitudinal folds (23) and made of a sheet bending back on itself and tightly mating with cables' and connectors' shape, and closed at its two longitudinal ends (26) by means of a tenon and mortise joint (28).

2. Accessory according to claim 1, characterised in that said longitudinal ends (26) of the envelope (12) have flat portions (30) provided with holes (32) to allow through fixing means, a double grooved joint (34) being provided on one of said flat portions (30).

3. Accessory according to claims 1 and 2 above, characterised in that each flange (14) is provided with a groove (36) receiving a corresponding projection (38) of the envelope (12).

4. Accessory according to claim 3, characterised in that at least one double grooved joint (40) is provided on the inner surface (42) of said envelope, opposite the outer surface (44) of each flange (14).

5. Accessory according to claim 1, characterised in that the envelope (12) is provided with at least one positioning finger member (46) co-operating with a flexible tab (48) provided with a hole (50).
